# EUROPÄISCHE PATENTSCHRIFT

(11) **EP 0 845 659 B1**
(45) Veröffentlichungstag und Bekanntmachung des Hinweises auf die Patenterteilung: **11.06.2003**
(21) Anmeldenummer: 97120515.8
(22) Anmeldetag: 22.11.1997
(51) Int. Cl.: G01D 5/20

(54) **Abtastelement für eine Positionsmesseinrichtung**
Sensor for a position measuring device
Capteur pour un dispositif de mesure de position

(30) Priorität: 29.11.1996 DE 19649504
(43) Veröffentlichungstag der Anmeldung: 03.06.1998
(73) Patentinhaber: Dr. Johannes Heidenhain GmbH, 83292 Traunreut (DE)
(72) Erfinder: Fischer, Peter, Dipl.-Ing., 83233 Bernau am Chiemsee (DE)

(56) Entgegenhaltungen:
- EP-A- 0 743 508
- WO-A-97/19323
- DE-A- 4 021 637

## Beschreibung

Die vorliegende Erfindung betrifft ein Abtastelement für eine Positionsmeßeinrichtung gemäß dem Oberbegriff des Anspruches 1.

Neben Positionsmeßeinrichtungen, bei denen zur Gewinnung positionsabhängiger Informationen eine periodische Meßteilung optisch abgetastet wird, sind Meßsysteme bekannt, die auf alternativen Abtastprinzipien beruhen. Derartige Positionsmeßeinrichtungen erweisen sich insbesondere unter bestimmten Umgebungsbedingungen als weniger anfällig als die erwähnten optischen Meßsysteme. Entsprechende Umgebungsbedingungen sind beispielsweise in Anwendungen gegeben, bei denen die Drehbewegung der Welle eines Antriebs erfaßt werden soll. Eine Positionsmeßeinrichtung, die auch unter rauheren Umgebungsbedingungen eingesetzt werden kann, ist beispielsweise in der EP 0 289 033 B1 beschrieben. Hierbei wird eine Teilungsspur mit alternierend angeordneten elektrisch leitfähigen und nicht-leitfähigen Bereichen induktiv abgetastet. Das entsprechende Abtastelement umfaßt zu diesem Zweck ein oder mehrere Erregerspulen, die im Bereich der abgetasteten Teilungsspur ein homogenes elektromagnetisches Feld erzeugen. Ferner sind abtastseitig Sensorwicklungen vorgesehen, die ebenfalls im homogenen Feld der Erregerspulen angeordnet sind und zur Erfassung der in den leitfähigen Teilbereichen induzierten elektromagnetischen Felder dienen, so daß ein verschiebungsabhängig moduliertes Ausgangssignal resultiert. Auf diese Art und Weise läßt sich die Relativbewegung zwischen der Teilungsspur und dem Abtastelement erfassen. Hinsichtlich des Funktionsprinzips einer derartigen Positionsmeßeinrichtung sei außerdem auf die EP 0 182 085 verwiesen.

Eine ähnlich aufgebaute induktive Positionsmeßeinrichtung ist desweiteren aus der DE 195 04 307 bekannt. Dort wird unter anderem auch vorgeschlagen, nicht nur eine einzige Teilungsspur abzutasten, sondern vielmehr weitere Spuren vorzusehen, die auf die erläuterte Art und Weise ausgelesen werden können. Details hinsichtlich der konkreten Ausbildung einer Meßanordnung mit mehreren abgetasteten Teilungsspuren sowie Möglichkeiten zur Erzeugung der Erregerfelder sind in dieser Druckschrift jedoch nicht angegeben.

Eine weitere induktive Positionsmeßeinrichtung, die nach den oben erwähnten Prinzipien arbeitet, ist ferner aus der EP 0743 508 A2 bekannt. Auch aus dieser Druckschrift ergeben sich jedoch keine Hinweise, wie etwa im Fall mehrerer abgetasteter Teilungsspuren das Abtastelement konkret ausgestaltet werden soll. Insbesondere bleibt offen, wie für die verschiedenen Abtastspuren etwa eine Erzeugung möglichst homogner Erregerfelder erfolgen soll.

Aufgabe der vorliegenden Erfindung ist es daher, ein gattungsgemäßes Abtastelement für eine induktive Positionsmeßeinrichtung derart auszubilden, daß auch im Fall mehrerer vorgesehener Abtastspuren ein zuverlässiges Funktionieren sichergestellt ist. Insbesondere soll dabei auch für mehrere Abtastspuren die Erzeugung homogener Erreger-Felder im Bereich der verschiedenen Abtastspuren gewährleistet sein.

Diese Aufgabe wird gelöst durch ein Abtastelement mit den Merkmalen des Anspruches 1.

Vorteilhafte Ausführungsformen des erfindungsgemäßen Abtastelements ergeben sich aus den Maßnahmen in den abhängigen Ansprüchen.

Gegenstand des Anspruches 11 ist desweiteren eine Positionsmeßeinrichtung, in der ein erfindungsgemäß ausgebildetes Abtastelement eingesetzt wird.

Die erfindungsgemäßen Maßnahmen gewährleisten nunmehr, daß auch im Fall mehrerer benachbart angeordneter Abtastspuren die Sensorwicklungen aller vorgesehenen Abtastspuren in einem homogenen elektromagnetischen Feld angeordnet sind. Durch die geeignete Verschaltung der Erreger-Elemente läßt sich jeweils auf einfache Art und Weise ein homogenes Erreger-Feld im Bereich der verschiedenen Abtastspuren erzeugen. Verschiedene Abtastspuren können hierbei zu unterschiedlichsten Zwecken vorgesehen werden, wie etwa eine Abtastspur zur Antriebskommutierung zu nutzen, eine andere zur inkrementalen Positionsbestimmung etc..
Als vorteilhaft erweist sich die Ausbildung der Erreger-Elemente in Form von Leiterbahn-Einheiten, bestehend aus mehreren parallel angeordneten, stromdurchflossenen einzelnen Leiterbahnen. In Verbindung mit dem mehrlagigen Aufbau des Abtastelementes läßt sich derart insbesondere eine kompakte Bauweise des Abtastelements bzw. der kompletten Positionsmeßeinrichtung gewährleisten. Hierbei lassen sich in vorteilhafter Weise bekannte Techniken aus der Leiterplatten-Herstellung einsetzen, d.h. es ist eine einfache Fertigung eines erfindungsgemäß aufgebauten Abtastelementes möglich.

Hinsichtlich der erfindungsgemäßen Erzeugung der homogenen Erreger-Felder im Bereich der Abtastspuren existieren eine Reihe von Verschaltungsmöglichkeiten, d.h. das erfindungsgemäße Abtastelement läßt sich flexibel an verschiedene Meßanforderungen anpassen. Selbstverständlich können die erfindungsgemäßen Maßnahmen darüberhinaus sowohl in linearen als auch in rotatorischen Positionsmeßeinrichtungen eingesetzt werden; ebenso ist auch der Einsatz in verschiedensten Meßsystemen möglich, d.h. sowohl in absoluten wie auch in inkrementellen Meßsystemen unterschiedlichster Bauart und in entsprechenden Kombinationen derselben.
Weitere Vorteile sowie Einzelheiten des erfindungsgemäßen Abtastelements ergeben sich aus der nachfolgenden Beschreibung eines Ausführungsbeispiels anhand der beiliegenden Figuren.

Dabei zeigt
- Figur 1: eine seitliche Schnittansicht einer induktiven Positionsmeßeinrichtung mit dem erfindungsgemäß ausgebildeten Abtastelement;
- Figur 2: eine Draufsicht auf die in der Positionsmeßeinrichtung gemäß Figur 1 eingesetzte Ausführungsform des erfindungsgemäßen Abtastelements;
- Figur 3: eine Draufsicht auf den mit dem Abtastelement aus Figur 2 abgetasteten Teilungsträger inklusive der zwei vorgesehenen Teilungsspuren;
- Figur 4: eine schematisierte Darstellung zur Erläuterung der Erregerfeld-Erzeugung;
- Figur 5a-5e: jeweils eine alternative Möglichkeit zur Erzeugung der Erreger-Felder für zwei benachbart angeordnete Abtastspuren;
- Figur 6: einen Querschnitt durch das Abtastelement aus Figur 2.

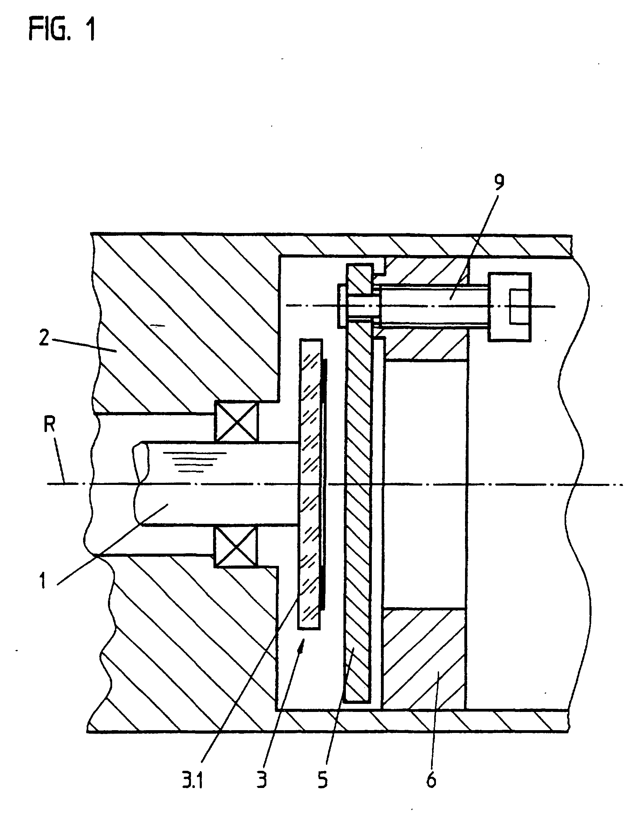

Eine seitliche Schnittansicht einer Ausführungsform einer induktiven Positionsmeßeinrichtung, in der ein erfindungsgemäß ausgebildetes Abtastelement eingesetzt ist, zeigt Figur 1. Die dargestellte Positionsmeßeinrichtung ist hierbei als Winkelmeßeinrichtung ausgebildet, die zur Detektion des Drehwinkels der Welle 1 eines Antriebs relativ zu einem stationären Antriebsteil 2 dient. Mit dem Bezugszeichen R sei in Figur 1 die Drehachse der Welle 1 bezeichnet; weitere Antriebsdetails sind nicht dargestellt. An der Welle 1 des Antriebs ist eine Teilscheibe 3 befestigt, die mit Hilfe des erfindungsgemäß ausgebildeten, stationären Abtastelementes 5 abgetastet wird. Die mit der Welle 1 um die Drehachse R rotierende Teilscheibe 3 besteht dabei aus einem Teilungsträger 3.1, auf dem zwei radial benachbarte Teilungsspuren angeordnet sind. Das Abtastelement 5 ist im Gehäuse bzw. stationären Teil 2 des Antriebs 2 an einem Monlageelement 6 über eine Schraube 9 befestigt. Nicht dargestellt ist in Figur 1 eine dem Abtastelement 5 nachgeordnete Auswerte- und Versorgungseinheit. Diese dient zum einen zur Versorgung des Abtastelementes 5 bzw. der darauf angeordneten Erreger-Elemente mit einer Versorgungsspannung sowie zum anderen zur Auswertung der periodisch modulierten, positionsabhängigen Ausgangssignale des Abtastelementes 5, die aus der Abtastung der Teilscheibe 3 resultieren. Eine derartige Auswerte- und Versorgungseinheit kann beispielsweise in Form einer numerischen Steuerung realisiert sein.
Neben der in Figur 1 dargestellten Meßsystem-Relativanordnung mit der rotierenden Teilscheibe 3 und dem stationären Abtastelement 5 ist selbstverständlich auch ein Positionsmeßsystem mit stationärer Teilscheibe und rotierender Abtasteinheit auf Grundlage der erfindungsgemäßen Überlegungen realisierbar.
Zur detaillierten Erläuterung des grundsätzlichen Funktionsprinzips einer derartigen Positionsmeßeinrichtung sei an dieser Stelle auf die bereits eingangs erwähnte EP 0 182 085 B1 verwiesen.

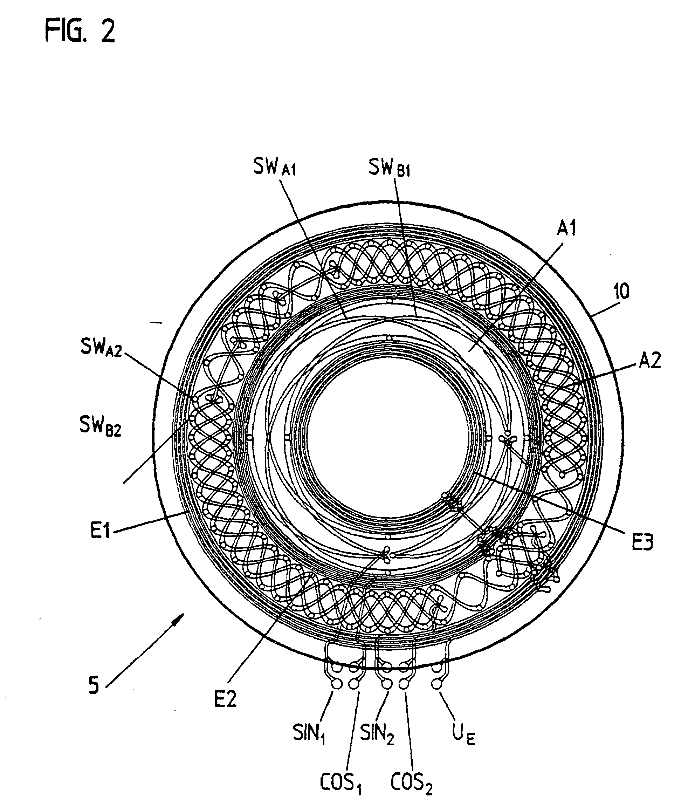

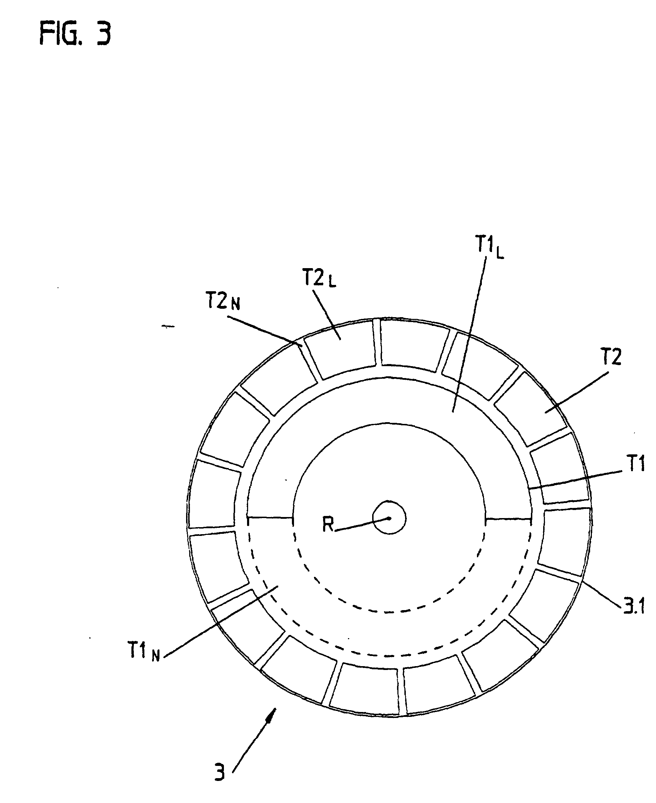

Eine Beschreibung des erfindungsgemäß ausgebildeten Abtastelementes 5 sowie der damit induktiv abgetasteten Teilscheibe 3 im dargestellten Ausführungsbeispiel der Figur 1 folgt anschließend anhand der Figuren 2 und 3. Hierbei zeigt Figur 2 eine Frontansicht des Abtastelements 5; die damit abgetastete Teilscheibe 3 ist in Figur 3 ebenfalls in einer Frontansicht dargestellt.
Im Ausführungsbeispiel der Figuren 1 - 3 ist hierbei vorgesehen, mit Hilfe des Abtastelementes 5 insgesamt zwei Teilungsspuren T1, T2 auf der Teilscheibe 3 induktiv abzutasten. Die beiden Teilungsspuren T1, T2 sind kreisförmig ausgebildet und radial benachbart auf einem Teilungsträger 3.1 angeordnet. Als Material für den Teilungsträger 3.1 dient im dargestellten Ausführungsbeispiel Epoxyd-Material. Die beiden Teilungsspuren T1, T2 bestehen jeweils aus einer periodischen Abfolge von alternierend angeordneten elektrisch-leitfähigen Teilungsbereichen T1_{L}, T2_{L} und nicht-leitfähigen Teilungsbereichen T1_{N}, T2_{N}. Als geeignetes Material für die elektrisch-leitfähigen Teilbereiche T1_{L}, T2_{L} erweist sich etwa Kupfer, das auf dem Teilungsträger 3.1 aufgebracht wird. In den nicht-leitfähigen Teilungsbereichen T1_{L}, T2_{L} wurde der Teilungsträger 3.1 demgegenüber lediglich nicht beschichtet und ist identisch mit dem Material des Teilungsträgers 3.1.
Die innere Teilungsspur T1 besteht in der dargestellten Ausführungsform lediglich aus einem ersten halbkreisförmigen Teilungsbereich T1_{L} mit elektrisch leitfähigem Material sowie einem zweiten halbkreisförmigen Teilungsbereich T1_{N}, in dem kein leitfähiges Material angeordnet ist. Aus der Abtastung der Teilungsspur T1 mit Hilfe des nachfolgend erläuterten Abtastelements 5 resultiert eine relativ grobe, absolute Positionsinformation innerhalb einer Umdrehung der Teilscheibe 3 um die Drehachse R.

Radial benachbart zur ersten Teilungsspur T1 ist eine zweite Teilungsspur T2 auf dem Teilungsträger 3.1 angeordnet, die aus einer Vielzahl elektrischleitfähiger Teilungsbereiche T2_{L} sowie dazwischen angeordneten Teilungsbereichen T2_{N} besteht. Die verschiedenen Teilungsbereiche T2_{L}, T2_{N} sind materialmäßig dabei ebenso ausgebildet wie der Teilungsbereich T1_{L} der ersten Teilungsspur T1. Insgesamt umfaßt die zweite Teilungsspur T2 im dargestellten Ausführungsbeispiel 16 periodisch angeordnete, elektrischleitfähige Teilungsbereiche T2_{L} sowie entsprechend 16 dazwischen angeordnete nicht-leitfähige Teilungsbereiche T2_{N}. Die Länge der elektrisch-leitfähigen Teilungsbereiche T2_{L} in Meßrichtung ist dabei über 10mal größer als die entsprechende Länge der nicht-leitfähigen Teilungsbereiche T2_{N}, d.h. es wird vorzugsweise ein von 1:1 abweichendes Verhältnis der Längen der unterschiedlichen Teilungsbereiche in dieser Teilungsspur gewählt. Aus der Abtastung der zweiten Teilungsspur T2 ergibt sich demzufolge ein resultierendes Inkrementalsignal bei der Relativbewegung von Teilscheibe 3 und Abtastelement 5. In Verbindung mit der absoluten Positionsbestimmung über die erste Teilungsspur T1 ist über eine derartige Anordnung eine hochauflösende Drehwinkelbestimmung möglich.
Neben der in diesem Ausführungsbeispiel gewählten Kombination mit zwei separaten Teilungsspuren T1, T2, die jeweils eine absolute Positionsbestimmung sowie eine inkrementale Positionsbestimmung ermöglichen, sind selbstverständlich auch weitere Kombinationen möglich, beispielsweise die Ausbildung einer Code-Teilscheibe mit mehreren verschiedenen Spuren etc.. Ferner kann auch die Inkremental-Teilungsspur in abgewandelter Form ausgebildet werden, d.h. mit anderen Teilungsverhältnissen. Daneben können z.B. auch mehrere parallel benachbarte Inkrementalteilungsspuren mit unterschiedlichen Periodizitäten der Teilungsverhältnisse eingesetzt werden usw..

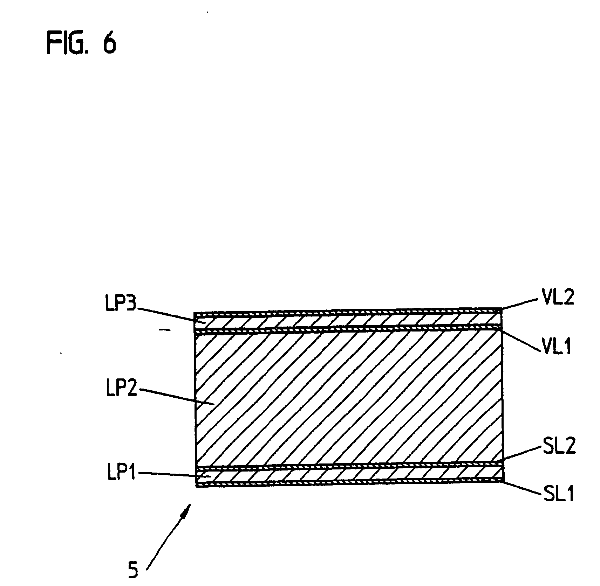

Das in Figur 2 gezeigte, zur Abtastung der Teilscheibe 3 vorgesehene erfindungsgemäße Abtastelement 5 umfaßt zwei, den Teilungsspuren T1, T2 zugeordnete Abtastspuren A1, A2, die ebenfalls kreisförmig ausgebildet und radial benachbart auf einem Trägerelement 10 angeordnet sind. Der einfacheren Verständlichkeit wegen, sei nachfolgend jeweils von einem einzigen Trägerelement 10 die Rede, wenngleich in der gezeigten Ausführungsform des Abtastelements 5 ein mehrlagiger Aufbau desselben mit mehreren Leiterplattenlagen, Verbindungslagen und Sensorlagen vorgesehen ist. Hinsichtlich dieses Mehrlagen-Aufbaus sei auf die Beschreibung der Figur 6 verwiesen.
Die der inneren bzw. Absolut-Teilungsspur T1 zugeordnete Abtastspur A1 besteht im dargestellten Ausführungsbeispiel aus insgesamt zwei flach ausgebildeten Sensorwicklungen SW_{A1} und SW_{B1}, die über den Umfang der Abtastspur A1 jeweils eine einzige Signalperiode bei der Abtastung liefern. Die beiden Sensorwicklungen SW_{A1} und SW_{B1} sind hierbei relativ zueinander versetzt auf dem Trägerelement 10 des Abtastelements 5 angeordnet, so daß ausgangsseitig bei der Abtastung der rotierenden Teilscheibe 3 zwei Ausgangssignale SIN₁, COS₁ resultieren, die einen Phasenversatz von 90° zueinander aufweisen. Beide Ausgangssignale SIN₁, COS₁ liefern wie bereits erwähnt ein eindeutig-absolutes Positionssignal innerhalb einer Umdrehung der Welle 3 des Antriebs. Über die bekannte Auswertung der um 90° phasenversetzten Signale SIN₁, COS₁ ist zudem eine Richtungserkennung bei der Drehbewegung gewährleistet. In Figur 2 sind die entsprechenden Signalabgriffe des Abtastelementes 5 inclusive der zugehörigen Ausgangssignale der verschiedenen Abtastspuren A1, A2 eingezeichnet.

Die zweite Abtastspur A2, geeignet zur Abtastung der zweiten Teilungsspur T2, umfaßt ebenfalls zwei flache Sensorwicklungen SW_{A2}, SW_{B2} die auf dem Trägerelement 10 angeordnet sind. Zwischen den beiden Sensorwicklungen SW_{A2}, SW_{B2} ist ebenfalls ein Relativ-Versatz vorgesehen, so daß ausgangsseitig die beiden Signale SIN₂, COS₂ bei der Abtastung der zweiten Teilungsspur T2 resultieren, zwischen denen ein 90° Phasenversatz besteht Über den gesamten Umfang der zweiten Abtastspur A2 sind hierbei eine Vielzahl von Sensorwicklungen SW_{A2} und SW_{B2} auf dem Trägerelement 10 angeordnet.

Die Sensorwicklungen SW_{A1}, SW_{B1}, SW_{A2}, SW_{B2} der beiden Abtastspuren A1 und A2 sind aus Kupfer gefertigt; das Trägerelement besteht aus Epoxyd-Material. Insgesamt ist das erfindungsgemäße Abtastelement 5 mehrlagig ausgebildet, was etwa in bekannter Leiterplatten-Technologie realisiert werden kann. Zu Details hinsichtlich des Mehrlagen-Aufbaus sei auf die nachfolgende Beschreibung der Figur 6 verwiesen.

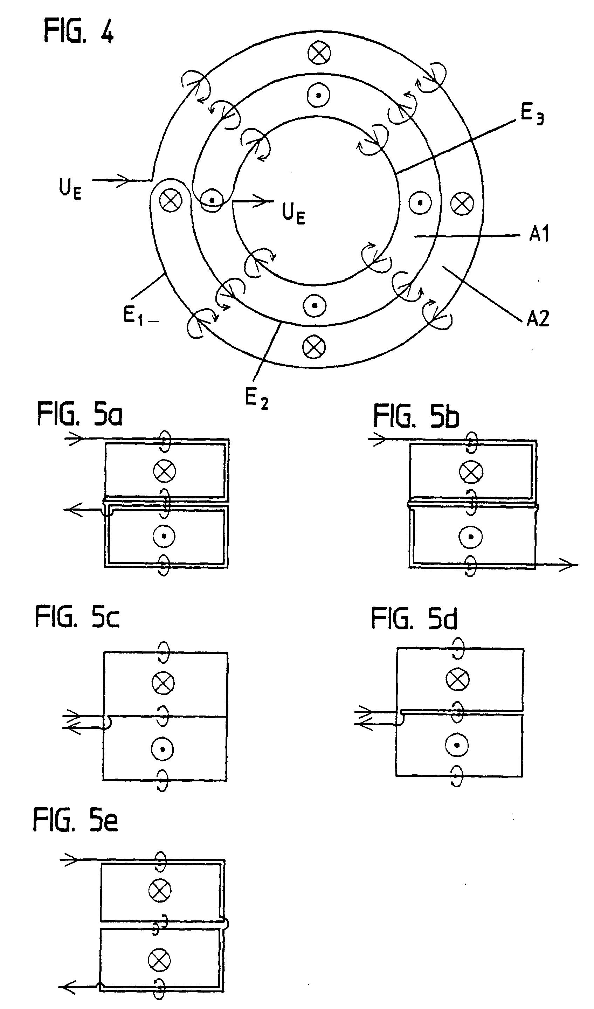

Neben den Sensorwicklungen SW_{A1}, SW_{B1}, SW_{A2}, SW_{B2} in den beiden Abtastspuren A1, A2 umfaßt das erfindungsgemäß ausgebildete Abtastelement 5 ferner Erreger-Elemente E1 - E3, die jeweils seitlich benachbart zu den Abtastspuren A1 und A2 auf dem Trägerelement 10 angeordnet sind. Die Erreger-Elemente E1 - E3 dienen dabei zur erforderlichen Erzeugung eines homogenen elektromagnetischen Erregerfeldes im Bereich der Abtastspuren A1 und A2 bzw. im Bereich der damit abgetasteten Teilungsspuren T1 und T2. Im dargestellten Ausführungsbeispiel sind die Erreger-Elemente E1 - E3 als Leiterbahneinheiten ausgebildet, die jeweils mehrere planar-parallel auf dem Trägerelement 10 angeordnete stromdurchflossene Leiterbahnen umfassen. Werden die Leiterbahnen einer Leiterbahneinheit allesamt in der gleichen Richtung von Strom durchflossen, so bildet sich um die jeweilige Leiterbahneinheit ein schlauch- bzw. zylinderförmig orientiertes elektromagnetisches Feld aus. Die Feldlinien des resultierenden elektromagnetischen Feldes verlaufen in Form konzentrischer Kreise um die Leiterbahneinheiten, wobei die Richtung der Feldlinien in bekannter Art und Weise von der Stromrichtung in den Leiterbahneinheiten abhängt.
Die Stromrichtung der unmittelbar an eine gemeinsame Abtastspur angrenzenden Leiterbahneinheiten bzw. die entsprechende Verschaltung dieser Leiterbahneinheiten ist dabei entgegengesetzt zu wählen, so daß die Feldlinien im Bereich der Abtastspuren jeweils identisch orientiert sind. Die Versorgung der Leiterbahneinheiten E1 - E3 mit einer Versorgungsspannung erfolgt über die ebenfalls in Figur 2 eingezeichneten Versorgungsspannungsabgriffe U_{E}. Um eine derartige Felderzeugung zu ermöglichen ist eine bestimmte Leiterbahnführung auf dem Trägerelement 10 erforderlich, die nachfolgend anhand von Figur 4 erläutert sei.

Dort ist aus Gründen der besseren Übersichtlichkeit jeweils lediglich eine einzige Leiterbahn der verschiedenen Leiterbahneinheiten bzw. Erreger-Einheiten E1 - E3 dargestellt. Ebenfalls eingezeichnet ist in Figur 4 auch die jeweilige Stromrichtung in den verschiedenen Leiterbahnen sowie die Versorgungsspannungsabgriffe U_{E}. Aufgrund der im Ausführungsbeispiel gewählten Leiterbahnführung wird das radial-äußerste Erregerelement E1 wie auch das radial-innerste Erregerelement E3 in der gleichen Richtung von Strom durchflossen. In der entgegengesetzten Richtung hingegen wird das mittlere der drei Erregerelemente E2 von Strom durchflossen, das zwischen den beiden Abtastspuren A1 und A2 auf dem Trägerelement angeordnet ist. Um die Leiterbahnen der Erregerelemente E1 - E3 bildet sich jeweils ein schlauch- bzw. zylinderförmig orientiertes elektromagnetisches Feld aus, wobei die resultierenden Feldrichtungen ebenfalls in Figur 4 eingezeichnet sind. Sowohl das Feld der ersten als auch der dritten Leiterbahn sind demzufolge in der gleichen Richtung orientiert, während das Feld in der mittleren der beiden Leiterbahnen entgegengesetzt orientiert ist. In den zwischen den Leiterbahnen liegenden Bereichen mit den Abtastspuren A1 und A2 resultiert demzufolge jeweils ein homogenes elektromagnetisches Feld, das sich aus den beiden Feldern der angrenzenden Erreger-Elemente E1 - E3 zusammensetzt, das entweder wie bei der Abtastspur A1 in Richtung der Zeichenebene orientiert ist bzw. im Fall der Abtastspur A2 aus der Zeichenebene heraus orientiert ist. Die entsprechenden Feldrichtungen in den beiden Abtastspuren A1, A2 sind in Figur 4 jeweils angedeutet.

Alternative Varianten hinsichtlich der möglichen Leiterbahnführung im Fall zweier benachbarter Abtastspuren sind desweiteren in den Figuren 5a - 5e schematisiert dargestellt. Aus den dort gezeigten Beispielen ist desweiteren ersichtlich, daß die erfindungsgemäßen Prinzipien auch bei linearen Meßanordnungen jederzeit einsetzbar sind. Hierbei sind in den Figuren 5a - 5d jeweils Möglichkeiten offenbart, in denen die mittlere Leiterbahneinheit jeweils ein entgegengesetzt orientiertes Feld zu den Feldern der beiden äußeren Leiterbahneinheiten erzeugt. In den beiden Abtastspuren ergibt sich demzufolge immer ein entgegengesetzt ausgerichtetes, homogenes elektromagnetisches Feld in den eingezeichneten Richtungen. Alternativ hierzu ist im Ausführungsbeispiel der Figur 5e vorgesehen, die mittlere Leiterbahneinheit zwischen den zwei Abtastspuren wirkungsmäßig in zwei Teil-Leiterbahneinheiten aufzuteilen. Die beiden Teil-Leiterbahneinheiten werden hierbei in unterschiedlicher Richtung vom Strom durchflossen, wobei jedoch wie in den vorab erläuterten Varianten gilt, daß die unmittelbar benachbart zu einer Abtastspur angeordneten Leiterbahneinheiten ein entgegengesetzt orientiertes Feld erzeugen, die sich im Bereich der Abtastspur zu einem homogenen Feld definierter Richtung überlagern.

Wie bereits bei der Beschreibung der Teilscheibe angedeutet, existieren selbstverständlich auch für das Abtastelement noch andere Möglichkeiten, mehrere parallele Abtastspuren darauf anzuordnen. So können etwa auch mehr als zwei Abtastspuren vorgesehen werden, die jeweils Sensorwicklungen mit unterschiedlichen Periodizitäten aufweisen etc.. Auch für derartige Anordnungen läßt sich auf Grundlage der erfindungsgemäßen Überlegungen die Erzeugung homogener Erregerfelder durch die entsprechende Ausgestaltung und Anordnung der Erreger-Elemente sicherstellen.

Die entsprechende Führung der verschiedenen erforderlichen Leiterbahnen für die Sensorwicklungen sowie für die Erreger-Elemente auf dem Abtastelement läßt sich in vorteilhafter Weise durch eine Mehrlagentechnik realisieren, wie sie beispielsweise aus der Leiterplattentechnologie bekannt ist. Zur Erläuterung des Abtastelement-Aufbaus in einer derartigen Mehrlagentechnik ist in Figur 6 ein Querschnitt des Abtastelementes aus Figur 2 dargestellt.
Das Abtastelement 5 des beschriebenen Ausführungsbeispiels weist einen sieben-lagigen Aufbau auf. Der in Figur 6 nicht gezeigten Teilscheibe ist hierbei eine erste Sensorlage SL1 zugewandt, die von einer zweiten Sensorlage SL2 durch eine dünne, erste Leiterplattenschicht LP1 getrennt ist. In jeder der beiden Sensorlagen SL1, SL2 ist jeweils ein Teil der Erreger-Elemente als auch ein Teil der verschiedenen Sensorwicklungen angeordnet. Die Verteilung der Erreger-Elemente als auch der Sensorwicklungen in die beiden Sensorlagen SL1, SL2 erweist sich als vorteilhaft, um unerwünschte Leitungsüberkreuzungen zu vermeiden. Bei der zwischen den beiden Sensorlagen angeordneten ersten Leiterplattenschicht LP ist zu beachten, daß diese möglichst dünn ausgebildet ist, etwa im Bereich 1/10 mm, um zu gewährleisten, daß insbesondere die in den unterschiedlichen Sensorlagen SL1, SL2 angeordneten Sensorwicklungen in gleicher Weise von den leitfähigen Teilungsbereichen der Teilscheibe beeinflußt werden.
Oberhalb der zweiten Sensorlage SL2 ist eine dickere, zweite Leiterplattenlage LP2 vorgesehen, die im wesentlichen zur mechanischen Stabilisierung des Abtastelementes 5 dient und ca. 1-2 mm dick ausgebildet ist. Darüber wiederum sind zwei Verbindungslagen VL1, VL2 angeordnet, die durch eine dritte Leiterplattenlage LP3 getrennt sind. In den Verbindungslagen VL1, VL2 erfolgt die Führung derjenigen Leiterbahnen, die zur Versorgung der Erregerelemente, zur Verbindung der Erregerelemente, zum Signalabgriff etc. erforderlich sind. Die zweilagige Ausgestaltung der Verbindungslagen VL1, VL2 ermöglicht wiederum die ggf. erforderliche kreuzungsfreie Führung derartiger Verbindungsleitungen.
Das erfindungsgemäß ausgebildete Abtastelement läßt sich in einem derartigen Mehrlagen-Aufbau in rationeller Art und Weise über bekannte Leiterplatten-Technologien herstellen.

## Patentansprüche

1. Abtastelement für eine Positionsmeßeinrichtung, das zur Erzeugung von positionsabhängigen Ausgangssignalen bei der induktiven Abtastung mindestens zweier benachbarter Teilungs-Spuren (T1, T2) mit unterschiedlichen Teilungsverhältnissen dient, die aus alternierend angeordneten, elektrisch leitfähigen und nicht-leitfähigen Teilungsbereichen (T_{1L}, T_{1N}, T_{2L}, T_{2N}) bestehen, wobei das Abtastelement (5) ein Trägerelement (10) umfaßt, auf dem mindestens zwei benachbarte Abtastspuren (A1, A2) mit flachen Sensorwicklungen (SW_{A1}, SW_{B1}, SW_{A2}, SW_{B2}) unterschiedlicher Periodizität angeordnet sind und jeweils seitlich benachbart zu den Abtastspuren (A1, A2) Erreger-Elemente (E1, E2, E3) angeordnet sind, so daß sich im Bereich der Abtastspuren (A1, A2) jeweils ein homogenes elektromagnetisches Erreger-Feld ausbildet, wobei die Erreger-Elemente (E1, E2, E3) als Leiterbahn-Einheiten ausgebildet sind, die jeweils mehrere planar-parallel auf dem Trägerelement (10) angeordnete, stromdurchflossene Leiterbahnen umfassen, so daß sich ein schlauchförmiges elektromagnetisches Feld um die jeweiligen Leiterbahneinheiten ausbildet und wobei über ein Erregerelement (E2) zwischen benachbarten Abtastspuren (A1, A2) ein Erreger-Feld für beide Abtastspuren (A1, A2) erzeugbar ist.

2. Abtastelement nach Anspruch 1, wobei die Leiterbahnen der Erreger-Elemente (E1, E2, E3) derart verschaltet sind, daß die Stromrichtung in Leiterbahnen benachbarter Leiterbahneinheiten jeweils gegensinnnig orientiert ist und sich zwischen den benachbarten Leiterbahneinheiten im Bereich der Abtastspuren (A1, A2) ein homogenes elektromagnetisches Feld in einer definierten Raumrichtung ausbildet.

3. Abtastelement nach Anspruch 1, wobei das Trägerelement (10) mehrlagig aufgebaut ist.

4. Abtastelement nach Anspruch 3, wobei das Trägerelement (10) mindestens zwei Sensorlagen (SL1, SL2) aufweist, in denen jeweils Teile der Sensorwicklungen (SW_{A1}, SW_{B1}, SW_{A2}, SW_{B2}) angeordnet sind.

5. Abtastelement nach Anspruch 1, wobei mindestens eine erste Abtastspur (A1) mit den zugehörigen Sensorwicklungen (SW_{A1}, SW_{B1}) so ausgebildet ist, daß damit über den erfaßbaren Meßbereich eine absolute Positionsbestimmung möglich ist und mindestens eine weitere, zweite Abtastspur (A2) mit zugehörigen Sensorwicklungen (SW_{A2}, SW_{B2}) so ausgebildet ist, daß damit eine inkrementale Positionsbestimmung möglich ist.

6. Abtastelement nach Anspruch 1, wobei pro Abtastspur (A1, A2) mindestens zwei gegeneinander verschobene Sensorwicklungen (SW_{A1}, SW_{B1}, SW_{A2}, SW_{B2}) auf dem Trägerelement (10) angeordnet sind, so daß ausgangsseitig pro Abtastspur (A1, A2) jeweils mindestens zwei phasenversetzte, periodisch modulierte Ausgangssignale (SIN₁, COS₁; SIN₂, COS₂) bei der Verschiebung von Abtastelement (5) und Teilungsspuren (T1, T2) resultieren.

7. Abtastelement nach Anspruch 1, wobei das Trägerelement (10) in Form einer dünnen kreisförmigen Scheibe ausgebildet ist und sowohl die Abtastspuren (A1, A2) als auch die Erreger-Elemente (E1, E2, E3) darauf kreisförrnig angeordnet sind.

8. Abtastelement nach Anspruch 1, 6 und 7, wobei auf dem Trägerelement (10) eine erste Absolut-Abtastspur (A1) und eine zweite Inkremental-Abtastspur (A2) radial benachbart angeordnet sind und sowohl seitlich benachbart als auch zwischen den beiden Abtastspuren (A1, A2) Leiterbahneinheiten als Erreger-Elemente (E1, E2, E3) zur Erzeugung eines homogenen elektromagnetischen Errreger-Feldes im Bereich der Abtastspuren (A1, A2) angeordnet sind.

9. Abtastelement nach Anspruch 8, wobei die Leiterbahneinheiten jeweils aus mehreren parallel angeordneten, einzelnen Leiterbahnen bestehen, die die derart verschaltet sind, daß die Leiterbahnen einer Leiterbahneinheit in der gleichen Richtung von Strom durchflossen werden.

10. Abtastelement nach Anspruch 11, wobei die Leiterbahneinheiten derart verschaltet sind, daß die innere und die äußere Leiterbahneinheit jeweils in der gleichen Richtung von Strom durchflossen wird während die mittlere Leiterbahneinheit in der entgegengesetzten Richtung von Strom durchflossen wird, so daß in den beiden Abtastspuren (A1, A2) jeweils ein entgegengesetzt orientiertes elektromagnetisches Erreger-Feld resultiert.

11. Positionsmeßeinrichtung zur Erzeugung von positionsabhängigen Ausgangssignalen durch die induktive Abtastung mindestens zweier Teilungs-Spuren mit alternierend angeordneten elektrisch leitfähigen und nicht-leitfähigen Teilungsbereichen mit einem zur Abtastung vorgesehenen Abtastelement (5) gemäß mindestens einem der vorangehenden Ansprüche.

12. Positionsmeßeinichtung nach Anspruch 11 und 7, wobei mindestens zwei abgetastete, kreisförmig ausgebildete Teilungsspuren (T1, T2) auf einem kreisförmigen Teilungsträger (3.1) angeordnet sind.

13. Positionsmeßeinrichtung nach Anspruch 12, wobei auf dem kreisförmigen Teilungsträger (3.1) zwei radial benachbarte Teilungsspuren (T1, T2) angeordnet sind, von denen eine erste Teilungsspur (T2) als periodische Abfolge von mehreren elektrisch-leitfähigen Teilungsbereichen (T2_{L}) und nicht-leitfähigen Teilungsbereichen (T2_{N}) ausgebildet ist, während die andere aus einem elektrisch-leitfänigem (T1_{L}) Kreissegment und einem nicht-leitfähigen Kreissegment (T1_{N}) besteht.

## Claims

1. A scanner element for a position measuring device, which serves to generate position-dependent output signals by inductive scanning of at least two adjacent graduation tracks (T1, T2) with different graduation relationships, which consist of alternately arranged electrically conductive and non-conductive graduation regions (T_{1L}, T_{1N}, T_{2L}, T_{2N}), wherein the scanner element (5) comprises a carrier element (10) on which are disposed at least two adjacent scanning tracks (A1, A2) with flat sensor windings (SW_{A1}, SW_{B1}, SW_{A2}, SW_{B2}) with different periodicities and exciter elements (E1, E2, E3) are each arranged adjacent the scanning tracks (A1, A2), so that in the region of the scanning tracks (A1, A2) a homogenous electric excitation field is formed in each case, wherein the exciter elements (E1, E2, E3) are in the form of conductor track units which each comprise a plurality of current carrying conductor tracks arranged plane parallel on the carrier element (10), so that a tubular electromagnetic field is formed around the respective conductor track units and wherein an excitation field can be created for both scanning tracks (A1, A2) by an exciter element (E2) between adjacent scanning tracks (A1, A2).

2. A scanner element according to claim 1, wherein the conductor tracks of the exciter elements (E1, E2, E3) are so interconnected that the directions of current in adjacent conductor track units are oppositely orientated in each case and a homogenous electromagnetic field with a defined spatial direction forms between the adjacent conductor track units in the region of the scanning tracks (A1, A2).

3. A scanner element according to claim 1, wherein the carrier element (10) is of multilayered construction.

4. A scanner element according to claim 3, wherein the carrier element (10) comprises at least two sensor layers (SL1, SL2), in each of which parts of the sensor windings (SW_{A1}, SW_{B1}, SW_{A2}, SW_{B2}) are arranged.

5. A scanner element according to claim 1, wherein at least a first scanning track (A1) with the associated sensor windings (SW_{A1}, SW_{B1}) is so formed that an absolute position determination is possible therewith over the detectable measuring range and at least one further, second scanning track (A2) with associated sensor windings (SW_{A2}, SW_{B2}) is so formed that an incremental position determination is possible therewith.

6. A scanner element according to claim 1, at least two mutually displaced sensor windings (SW_{A1}, SW_{B1}, SW_{A2}, SW_{B2}) are arranged on the carrier element (10) per scanning track (A2, A2), so that at least two phase offset, periodically modulated output signals (SIN₁, COS₁; SIN₂, COS₂) result per scanning track (A1, A2) on the output side with the displacement of the scanner element (5) and graduation tracks (T1, T2).

7. A scanner element according to claim 1, wherein the carrier element (10) is in the form of a thin, circular disc and both the scanning tracks (A1, A2) and the exciter elements (E1, E2, E3) are disposed in circular form thereon.

8. A scanner element according to claims 1, 6 and 7, wherein a first, absolute scanning track (A1) and a second, incremental scanning track (A2) are arranged radially adjacent on the carrier element (10) and conductor track units are arranged as exciter elements (E1, E2, E3) laterally adjacent to and also between the two scanning tracks (A1, A2) to generate a homogenous electromagnetic field in the region of the scanning tracks (A1, A2).

9. A scanner element according to claim 8, wherein the conductor track units each consist of a plurality of individual conductor tracks arranged parallel to one another, which are so interconnected that the conductor tracks of a conductor track unit carry current in the same direction.

10. A scanner element according to claim 11, wherein the conductor track units as so interconnected that the inner and the outer conductor track units carry current in the same direction while the middle conductor track unit carries current in the opposite direction, so that oppositely orientated electromagnetic excitation fields result in the two scanning tracks (A1, A2) respectively.

11. A position measuring device for generating position dependent output signals by inductive scanning of at least two graduation tracks with alternately arranged electrically conductive and non-conductive graduation regions, with a scanner element (5) according to at least one of the preceding claims provided for the scanning.

12. A position measuring device according to claims 11 and 7, wherein at least two scanned graduation tracks (T1, T2) of circular form are disposed on a circular graduation carrier (3.1).

13. A position measuring device according to claim 12, wherein two radially adjacent graduation tracks (T1, T2) are arranged on the circular graduation carrier (3.1), of which a first graduation track (T2) is formed as a periodic sequence of a plurality of electrically conductive graduation regions (T2_{L}) and non-conductive graduation regions (T2_{N}), while the other consists of an electrically conductive segment of a circle (T1_{L}) and a non-conductive segment of a circle (T1_{N}).

## Revendications

1. Elément de palpage pour un dispositif de mesure de position, pour produire des signaux de sortie dépendant de la position lors du palpage inductif d'au moins deux pistes formant division (T1, T2) voisines avec des rapports de division différents, qui sont formées de plages (T_{1L}, T_{1N}, T_{2L}, T_{2N}) électriquement conductrices et non-conductrices disposées en alternance, dans lequel l'élément de palpage (5) comprend un support (10) sur lequel sont disposées au moins deux pistes de palpage (A1, A2) voisines avec des bobines de détecteur (SW_{A1}, SW_{B1}, SW_{A2}, SW_{B2}) plates, de périodes différentes, dans lequel des éléments d'excitation (E1, E2, E3) sont disposés près des pistes de palpage (A1, A2), sur le côté de celles-ci, de manière à former chaque fois dans la région des pistes de palpage (A1, A2), un champ électromagnétique d'excitation homogène, dans lequel les éléments d'excitation (E1, E2, E3) sont agencés sous forme d'ensembles de pistes conductrices comprenant chacun plusieurs pistes conductrices parallèles, planaires, qui sont disposées sur le support (10) et parcourues par le courant, de telle sorte qu'il se forme un champ électromagnétique tubulaire autour des ensembles de pistes conductrices concernés, et dans lequel, à l'aide d'un élément d'excitation (E2) entre deux pistes de palpage (A1, A2) voisines, un champ d'excitation peut être produit pour les deux pistes de palpage (A1, A2).

2. Elément de palpage selon la revendication 1, dans lequel les pistes conductrices des éléments d'excitation (E1, E2, E3) sont connectées de telle sorte que le sens du courant dans les pistes conductrices d'ensembles de pistes voisins soit opposé et qu'il se forme entre les ensembles de pistes conductrices voisins, dans la région des pistes de palpage (A1, A2), un champ électromagnétique homogène dans une direction définie de l'espace.

3. Elément de palpage selon la revendication 1, dans lequel le support (10) est formé de plusieurs couches.

4. Elément de palpage selon la revendication 3, dans lequel le support (10) comprend au moins dix couches de détecteurs (SL1, SL2) dans lesquelles sont disposées chaque fois des parties des bobines de détecteur (SW_{A1}, SW_{B1}, SW_{A2}, SW_{B2}).

5. Elément de palpage selon la revendication 1, dans lequel au moins une première piste de palpage (A1) avec les bobines de détecteur (SW_{A1}, SW_{B1}) concernées est agencée de manière à permettre une détermination de position absolue à l'intérieur de la zone de mesure palpée, et dans lequel au moins une deuxième piste de palpage (A2) avec les bobines de détecteur (SW_{A2}, SW_{B2}) concernées est agencée de manière à permettre une détermination de position incrémentale.

6. Elément de palpage selon la revendication 1, dans lequel pour chaque piste de palpage (A1, A2), au moins deux bobines de détecteur (SW_{A1}, SW_{B1}, SW_{A2}, SW_{B2}) sont disposées sur le support (10) en étant mutuellement décalées de manière à obtenir côté sortie, pour chaque piste de palpage (A1, A2), aux moins deux signaux de sortie (SIN₁, COS₁, SIN₂, COS₂) déphasés, à modulation périodique, lors du décalage de l'élément de palpage (5) et des pistes de division (T1, T2)

7. Elément de palpage selon la revendication 1, dans lequel le support (10) est agencé sous la forme d'une plaque circulaire, fine, et les pistes de palpage (A1, A2) ainsi que les éléments d'excitation (E1, E2, E3) sont disposés sous forme de cercle sur celle-ci.

8. Elément de palpage selon les revendications 1, 6 et 7, dans lequel une première piste de palpage (A1) absolue et une deuxième piste de palpage (A2) incrémentale sont voisines radialement sur le support (10) et dans lequel près des deux pistes de palpage (A1, A2) sur le côté et entre celles-ci, des ensembles de pistes conductrices sont disposés en tant qu'éléments d'excitation (E1, E2, E3) aux fins de produire un champ électromagnétique d'excitation homogène dans la région des pistes de palpage (A1, A2).

9. Elément de palpage selon la revendication 8, dans lequel les ensembles de pistes conductrices sont formés chaque fois de plusieurs pistes conductrices indépendantes disposées parallèlement les unes aux autres, qui sont connectées de telle sorte que les pistes conductrices d'un ensemble de pistes soit parcourues dans le même sens par le courant.

10. Elément de palpage selon la revendication 9, dans lequel les ensembles de pistes conductrices intérieur et extérieur sont parcourus dans le même sens par le courant, tandis que l'ensemble de pistes conductrices intermédiaire sont parcourus dans le sens opposé par le courant, de telle sorte qu'il en résulte dans les deux pistes de palpage (A1, A2) des champs électromagnétiques d'excitation opposés.

11. Dispositif de mesure de position pour produire des signaux de sortie dépendants de la position par palpage inductif d'au moins deux pistes de division avec des plages de division électriquement conductrices et non-conductrices disposées en alternance, comportant pour le palpage, un élément de palpage (5) selon au moins une des revendications précédentes.

12. Dispositif de mesure de position selon les revendications 11 et 7, dans lequel au moins deux pistes de division (T1, T2) palpées circulaires sont disposées sur un support de division (3.1) circulaire.

13. Dispositif de mesure de position selon la revendication 12, dans lequel deux pistes de division (T1, T2) voisines radialement sont disposées sur un support de division (3.1) circulaire, pistes parmi lesquelles une première piste de division (T2) est agencée sous forme de suite périodique de plusieurs plages de division électriquement conductrices (T2_{L}) et non conductrices (T2_{N}), tandis que l'autre piste de division (T2) comprend un segment de cercle électriquement conducteur (T1_{L}) et un segment de cercle électriquement non-conducteur (T1_{N}),
